# EUROPÄISCHE PATENTSCHRIFT

(11) **EP 0 443 469 B1**
(45) Veröffentlichungstag und Bekanntmachung des Hinweises auf die Patenterteilung: **01.02.1995**
(21) Anmeldenummer: 91102219.2
(22) Anmeldetag: 16.02.1991
(51) Int. Cl.: B01D 25/21

(54) **Rotorfilterpresse mit geteilten Filterplatten**
Rotor filter press with divided filter discs
Filtre-presse de rotor avec plaques de filtre divisées

(30) Priorität: 23.02.1990 DE 4005736
(43) Veröffentlichungstag der Anmeldung: 28.08.1991
(73) Patentinhaber: APPARATEBAU BIERSDORF Walter Krämer Gesellschaft mit beschränkter Haftung, Rain am Lech, D-86641 Rain (DE)
(72) Erfinder: Hölzemann,Jürgen, D-8852 Rain am Lech (DE)
(74) Vertreter: Böhme, Volker, Dipl.-Ing.

(56) Entgegenhaltungen:
- EP-A- 0 227 084
- EP-A- 0 324 865
- EP-A- 0 324 866

## Beschreibung

Die Erfindung betrifft eine Rotorfilterpresse, bei der Filterplatten vertikal angeordnet auf einem Träger stehen und von einer horizontalen Welle mittig durchdrungen sind, bei der jede Filterplatte an einer Seitenfläche mit einem Filter versehen ist, hinter dem Filter einen Sammelraum bildet und unten eine Auslaßöffnung aufweist, bei der unter den Filterplatten ein Sammelrohr verläuft, das jeweils über ein Anschlußstück mit der Auslaßöffnung der zugeordneten Filterplatte montierbar verbunden ist, und bei der jede Filterplatte in Filterplattensektoren geteilt ist, und ein unterer Filterplattensektor die Auslaßöffnung aufweist, über ein Zwischenstück von der Welle mit einem Abstand getrennt ist und mittels einer Drehbewegung um die Welle zwischen die Welle und den Träger/das Sammelrohr geschoben ist.

Bei einer bekannten (EP-A-0 324 865) Rotorfilterpresse dieser Art ist jedes Sammelrohr-Anschlußstück ein Anschlußschlauch, der an die Auslaßöffnung mittels Flansch anmontiert wird. Das Zwischenstück ist ein Gleitlagerring, der fest auf der Welle sitzt und den Abstand zwischen Welle und Filterplattensektor dauernd ausfüllt. Es ist schwierig und umständlich, die Anschlüsse der Filterplatten behindert durch das Sammelrohr und den Träger unter den Filterplatten zu montieren. Auch ist das passend genau eingefügte Einschieben der unteren Filterplattensektoren umständlich. Bei Benutzung der Rotorfilterpresse sind die Filterplatten häufig herauszunehmen, zu reinigen und wieder einzusetzen.

Eine Aufgabe der Erfindung ist es daher, eine Rotorfilterpresse der eingangs genannten Art zu schaffen, bei welcher der Ein- und Ausbau der unteren Filterplattensektoren hinsichtlich des Einschiebens und des Anschließens vereinfacht ist. Die erfindungsgemäße Rotorfilterpresse ist, diese Aufgabe losend, dadurch gekennzeichnet, daß jedes Sammelrohr-Anschlußstück ein Anschlußstutzen ist, über den der zugehörige untere Filterplattensektor mit der Auslaßöffnung entlang einer Absenkstrecke geschoben ist, daß die Absenkstrecke dem Abstand zwischen dem unteren Filterplattensektor und der Welle angepaßt ist und daß das Zwischenstück als Ringsegment ausgebildet ist, das mittels einer Drehbewegung um die Welle zwischen die Welle und den unteren Filterplattensektor geschoben ist.

Beim Einbau des unteren Filterplattensektors ist der für das Ringsegment-Zwischenstück vorgesehene Raum zunächst als Freiraum vorhanden, so daß der Filterplattensektor vereinfacht unter die Welle schiebbar ist. Die Verbindung des unteren Filterplattensektors mit dem Sammelraum erfolgt durch Absenken auf den Anschlußstutzen. Sodann wird bei der Welle das Zwischenstück-Ringsegment eingeschoben und die Montage des unteren Filterplattensektors ist beendet.

Das Ringsegment ist ein Ausgleichsteil und hat im wesentlichen keine Stützfunktion für die Welle, da die Welle an den Filterplatten im wesentlichen nicht gelagert ist. Die beiden Seiten der Filterplatte brauchen nicht flüssigkeitsdicht voneinander getrennt zu sein, so daß der Stoß zwischen dem Ringsegment und dem unteren Filterplattensektor und der Welle nicht dicht zu sein braucht. Der für den Ein- bzw. Ausbau des unteren Filterplattensektors vorgesehene Freiraum wird durch das Ringsegment ausgefüllt, da der Freiraum die Strömungsverhältnisse auf der mit dem Filter versehenen Seite der Filterplatte nachteilig beeinflussen würde. Auf dieser Seite werden mittels eines von der Welle getragenen Rotors Strömungen mit Cross-Flow-Effekt erzeugt, die für ein günstiges Wirken des Filters wichtig sind. Sollte die Welle bei starker Belastung etwas nach unten drücken, so wird sie von dem Ringsegment-Zwischenstück lagernd abgestützt, wozu dieses als Lager, z.B. als Gleitteil, ausgebildet sein kann.

Es ist in der Regel eine Festlegeeinrichtung vorgesehen, welche das Ringsegment an dem unteren Filterplattensektor festlegt und die z.B. eine Verschraubung ist. Besonders zweckmäßig und vorteilhaft ist es, wenn der untere Filterplattensektor und das Zwischenstück-Ringsegment mit einer Nut-Feder-Einrichtung ineinandergreifen. Die Nut-Feder-Einrichtung führt das Ringsegment beim Einschieben und verankert es gegen axiale Kräfte an dem unteren Filterplattensektor. Die Nut-Feder-Einrichtung bewirkt auch eine ausreichende Dichtheit zwischen Ringsegment und Filterplattensektor, wenn sie sich über die gesamte Länge des Stoßes dieser beiden Teile erstreckt.

Der eingesetzte untere Filterplattensektor ist z.B. an den Träger angeschraubt. Besonders zweckmäßig und vorteilhaft ist es jedoch, wenn der untere Filterplattensektor und der Träger mit einer Nut-Feder-Einrichtung ineinandergreifen. Der Nut-Feder-Eingriff entsteht beim Absenken des unteren Filterplattensektors und hält den Sektor ausreichend fest. Der Filterplattensektor wird nicht gegen die Reibung des Nut-Feder-Eingriffes eingedreht, sondern reibungsfrei eingedreht und dann radial abgesenkt. Die Nut-Feder-Einrichtung dient der axialen Fixierung des unteren Filterplattensektors.

Die Erfindung sieht auch vor, daß ein unterer Filterplattensektor und ein weiterer Filterplattensektor mit Stirnseiten aneinanderliegen und mittels einer Zusammenhalteeinrichtung in Plattenebene zusammengehalten sind und daß eine als Zusammenhalteeinrichtung vorgesehene, sich in Plattenebene in den beiden Filterplattensektoren erstreckende, mit Abstand vom äußeren Filterplattenrand angeordnete Verschraubung die Stirnseiten der Filterplattensektoren gegeneinander preßt. Die Verschraubung der Sektoren ist in der Montage einfach, erweitert die Außenkontur der Filterplatte nicht und gewährleistet Stabilität sowie Kippfestigkeit gegen axiale Belastungen.

In der Regel ist bei der hier zur Rede stehenden Rotorfilterpresse vorgesehen, daß der untere Filterplattensektor und ein weiterer Filterplattensektor mit Stirnseiten aneinanderliegen und mittels einer Zusammenhalteeinrichtung in Plattenebene zusammengehalten sind. Es ist auch angebracht, eine zwischen dem Zwischenstück-Ringsegment und dem unteren Filterplattensektor wirkende Festlegeeinrichtung vorzusehen. Dieser Festlegeeinrichtung sollte durch Ablagerungen nicht verkrustet, da dies die Demontage des Zwischenstück-Ringsegmentes stört. Ein Zutritt des Filtergutes zu der Festlegeeinrichtung sollte also verhindert sein.

Eine besonders zweckmäßige und vorteilhafte Ausführungsform der Erfindung ist dadurch gekennzeichnet, daß ein Ende des Zwischenstück-Ringsegmentes und eine Öffnung einer zwischen dem Ringsegment und dem unteren Filterplattensektor wirkenden Festlegeeinrichtung mit der Stirnseite des unteren Filterplattensektors fluchten und die Stirnseite des weiteren Filterplattensektors sich über das Ringsegment-Ende und die Festlegeeinrichtung-Öffnung erstreckt und daß eine als Zusammenhalteeinrichtung vorgesehene, sich in Plattenebene in den bei den Filterplattensektoren erstreckende, mit Abstand vom äußeren Filterplattenrand angeordnete Verschraubung die Stirnseite des weiteren Filterplattensektors gegen das Ringsegment-Ende und dichtend über die Festlegeeinrichtung-Öffnung preßt. Die der Welle näher gerückte Verschraubung hält die beiden Filterplattensektoren genau in der Plattenebene, verhindert Verkantungen aus der Plattenebene und ein Klaffen der Stirnseite des weiteren Filterplattensektors relativ zum Ringsegment-Ende und zur Festlegeeinrichtung-Öffnung.

Besonders zweckmäßig und vorteilhaft ist es dabei, wenn das Mutterngewinde der Verschraubung im unteren Filterplattensektor angeordnet ist und eine Schraube durch Kanäle in den beiden Filterplattensektoren gesteckt ist. Diese Gestaltung der Verschraubung behindert den Ein- bzw. Ausbau des unteren Filterplattensektors nicht. Die Verschraubung vereinfacht die Verbindung der beiden Filterplattensektoren miteinander.

Besonders zweckmäßig und vorteilhaft ist es, wenn die am Träger angebrachte Feder auch in eine Nut eines weiteren Filterplattensektors greift, der an den weiteren Filterplattensektor anschließt. Dies verbessert die Steifigkeit und Knickfestigkeit der Verbindung der in einer gemeinsamen Ebene befindlichen Filterplattensektoren.

In der Zeichnung ist eine bevorzugte Ausführungsform der Erfindung dargestellt und zeigt
- Fig. 1: eine Seitenansicht eines Teiles einer Rotorfilterpresse mit geteilten Filterplatten,
- Fig. 2: einen Schnitt gemäß Linie II-II in Fig. 1,
- Fig. 3: einen Ausschnitt der Darstellung in Fig. 2 in einem gegenüber Fig. 2 vergrößerten Maßstab,
- Fig. 4: eine Filterplatte der Rotorfilterpresse gemäß Fig. 1 in einem gegenüber Fig. 1 vergrößerten Maßstab und
- Fig. 5: eine Ansicht gemäß Linie V-V in Fig. 4.

Die Rotorfilterpresse gemäß Zeichnung weist zwei Stützen 1 auf, von denen nur eine gezeigt ist und die jeweils eine kreisrunde Endplatte 2 tragen, in denen eine Welle 3 drehbar gelagert ist, die mittels eines Motors 4 antreibbar ist, der an der einen Stütze 1 befestigt ist. Die Welle 3 trägt mit Abstand voneinander angeordnete kreisrunde Rotorscheiben 5, die jeweils auf einer Seite mit länglichen Flügeln 6 besetzt sind. Der mit den Flügeln 6 versehenen Seite gegenüber ist jeweils eine Filterplatte 7 angeordnet, die von der Welle 3 mittig durchdrungen ist. Die Filterplatte 7 umfaßt eine Grundplatte 8, die den Flügeln zugeordnet einen Filter 9 trägt, der als Filtertuch ausgebildet ist. Jeweils eine Rotorscheibe 5 und eine Filterplatte 7 begrenzen zwischen sich eine Kammer 10, 11, 12 von denen drei gezeigt sind und denen über eine nicht gezeigte Leitung eine zu filternde Flüssigkeit zugeführt wird. Zwischen den beiden Endplatten 2 erstreckt sich unten ein Träger 13, der rinnenartig ausgebildet ist und in dem die Filterplatten 7 stehen. Der rinnenartige Träger 13 bildet mittig unten eine Ausbauchung 14, in der ein Sammelrohr 15 angeordnet ist, das mit jeder Filterplatte 7 über einen Anschlußstutzen 16 und eine Auslaßöffnung 17 verbunden ist. Die Leitung für die Zufuhr der zu filternden Flüssigkeit wird ebenfalls in der Ausbauchung 14 angeordnet. Ein Zylindermantel 18 läßt sich in axialer Richtung über die Kammern 10, 11, 12 schieben, so daß die Endplatten 2 und der Zylindermantel 18 ein dichtes Gehäuse ergeben. Die Kammern brauchen gegeneinander nicht dicht zu sein. Von der zu filternden Flüssigkeit gelangt durch die Filter 9 in die Grundplatten Filtrat, das über das Sammelrohr 15 abfließt.

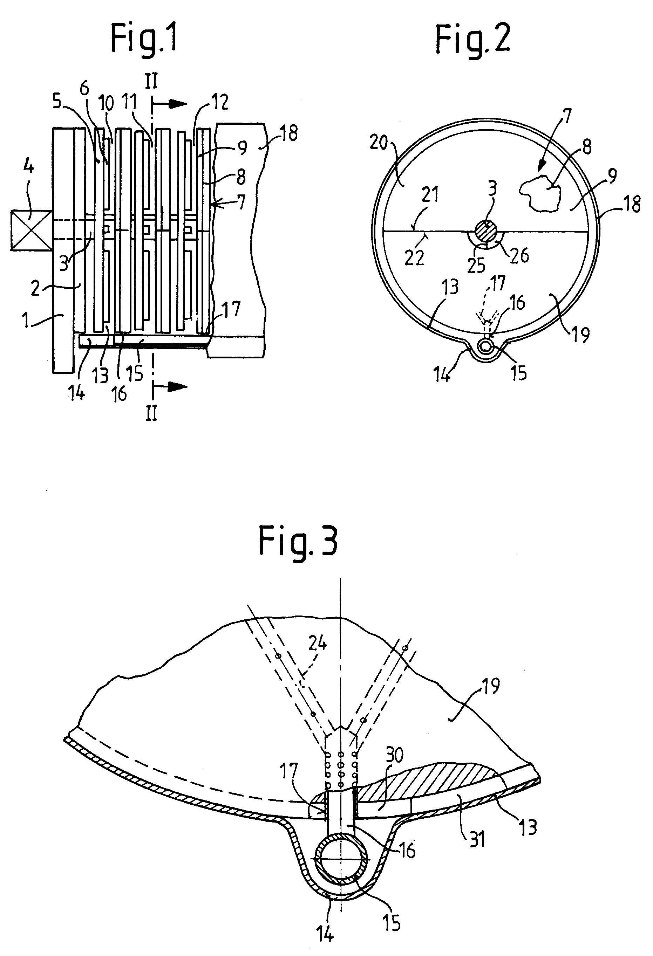

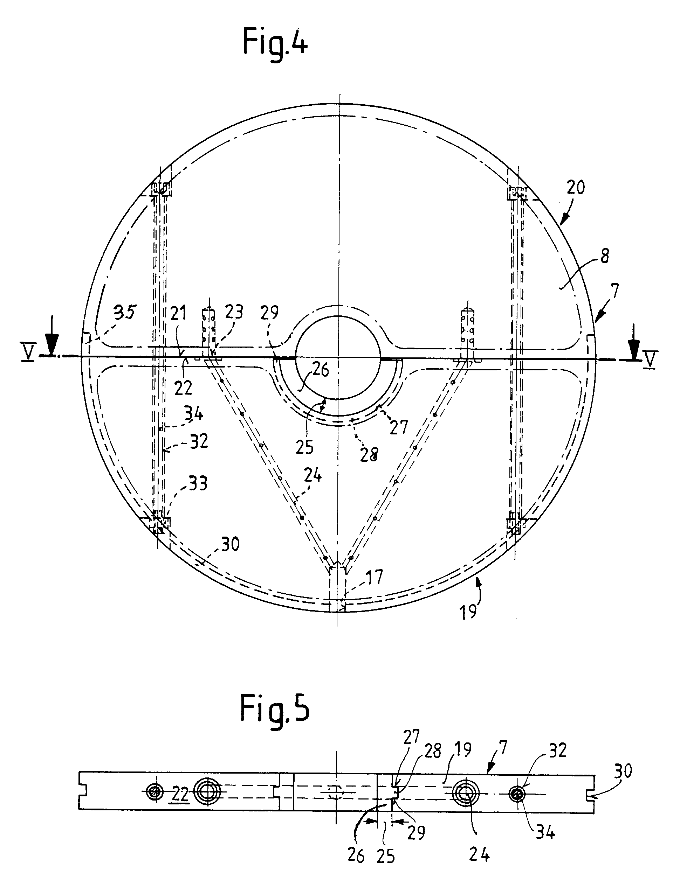

Wie aus Fig. 3-5 deutlicher hervorgeht, ist jede Filterplatte 7 in zwei Filterplattensektoren 19, 20 unterteilt, wobei die Trennlinien von der Welle 3 nach außen verlaufen. Im vorliegenden Fall verlaufen die beiden Trennlinien waagerecht. An den aneinanderliegenden Stirnseiten 21, 22 sind Mündungen 23 des nicht gezeigten Hohlraumes bzw. Sammelraumes des oberen Filterplattensektors 20 an obere Enden von Ablaufkanälen 24 dichtend gepreßt, die mit dem nicht gezeigten Hohlraum bzw. Sammelraum des unteren Filterplattensektors 19 in Verbindung stehen und die zu der Auslaßöffnung 17 führen, in welcher der Anschlußstutzen 16 steckt. Der untere Filterplattensektor 19 wendet der Welle 3 eine sektorförmige Ausnehmung zu und hat von der Welle 3 einen Abstand 25. Der Abstand 25 ist von einem Zwischenstück-Ringsegment 26 überbrückt, das in die Ausnehmung geschoben ist. Im Bereich der Ausnehmung ist entlang der bogenförmigen Stirnseite eine durchgehende Nut 27 vorgesehen, in welche eine durchgehende Feder 28 des Ringsegmentes 26 greift. Zur Stirnseite 22 des unteren Filterplattensektors 19 hin begrenzen die Nut 27 und die Feder 28 eine spaltartige Öffnung 29, die von der Stirnseite 21 des oberen Filterplattensektors 20 überdeckt ist.

Entlang dem bogenförmigen Außenrand des unteren Filterplattensektors 19 ist an dessen Stirnseite eine längsverlaufende Nut 30 vorgesehen, die sich beiderseits auch ein wenig auf die äußere Stirnseite des oberen Filterplattensektors 20 erstreckt. Anschließend an jedes obere Ende der Nut 30 ist in dem oberen Filterplattensektor 20 eine kurze Nut 35 vorgesehen, in welche die entsprechend lange Feder 31 greift. An dem Träger 13 sind bogenartig verlaufende simsartige Federn 31 vorgesehen, die sich beim Absenken des unteren Filterplattensektors 19 in dessen Nuten 30 einschieben. In den Filterplattensektoren 19, 20 sind ineinander übergehende Kanäle 32 vorgesehen, welche die Ablaufkanäle 24 nicht kreuzen und neben diesen angeordnet sind. Nahe dem unteren Rand des unteren Filterplattensektors 19 ist bei dem Kanal 32 eine Mutter mit einem Mutterngewinde 33 festgelegt, in das eine lange Schraube 34 geschraubt ist, deren Kopf nahe dem oberen Rand des oberen Filterplattensektors 20 abgestützt ist. Für die Verbindung der zwei Sektoren 19, 20 sind zwei solche Verschraubungen 33, 34 vorgesehen.

## Patentansprüche

1. Rotorfilterpresse,
bei der Filterplatten (7) vertikal angeordnet auf einem Träger (13) stehen und von einer horizontalen Welle (3) mittig durchdrungen sind,
bei der jede Filterplatte (7) an einer Seitenfläche mit einem Filter (9) versehen ist, hinter dem Filter einen Sammelraum bildet und unten eine Auslaßöffnung (17) aufweist,
bei der unter den Filterplatten ein Sammelrohr (15) verläuft, das jeweils über ein Anschlußstück (16) mit der Auslaßöffnung (17) der zugeordneten Filterplatte montierbar verbunden ist, und
bei der jede Filterplatte in Filterplattensektoren geteilt ist und ein unterer Filterplattensektor (19) die Auslaßöffnung (17) aufweist, über ein Zwischenstück (26) von der Welle (3) mit einem Abstand getrennt ist und mittels einer Drehbewegung um die Welle zwischen die Welle und den Träger/das Sammelrohr geschoben ist,
**dadurch gekennzeichnet,**
daß jedes Sammelrohr-Anschlußstück ein Anschlußstutzen (16) ist, über den der zugehörige untere Filterplattensektor (19) mit der Auslaßöffnung (17) entlang einer Absenkstrecke geschoben ist,
daß die Absenkstrecke dem Abstand (25) zwischen dem unteren Filterplattensektor (19) und der Welle (3) angepaßt ist und
daß das Zwischenstück als Ringsegment (26) ausgebildet ist, das mittels einer Drehbewegung um die Welle (3) zwischen die Welle (3) und den unteren Filterplattensektor (19) geschoben ist.

2. Rotorfilterpresse nach Anspruch 1, **dadurch gekennzeichnet,** daß der untere Filterplattensektor (19) und das Zwischenstück-Ringsegment (26) mit einer Nut-Feder-Einrichtung (27, 28) ineinandergreifen.

3. Rotorfilterpresse nach Anspruch 1 oder 2, **dadurch gekennzeichnet,** daß der untere Filterplattensektor (19) und der Träger (13) mit einer Nut-Feder-Einrichtung (30, 31) ineinandergreifen.

4. Rotorfilterpresse nach Anspruch 1, 2 oder 3, **dadurch gekennzeichnet,** daß der untere Filterplattensektor (19) und ein weiterer Filterplattensektor (20) mit Stirnseiten (21, 22) aneinanderliegen und mittels einer Zusammenhalteeinrichtung (33, 34) in Plattenebene zusammengehalten sind, und daß eine als Zusammenhalteeinrichtung vorgesehene, sich in Plattenebene in den beiden Filterplattensektoren (19, 20) erstreckende, mit Abstand vom äußeren Filterplattenrand angeordnete Verschraubung (33, 34) die Stirnseiten (21, 22) der Filterplattensektoren (19, 20) gegeneinander preßt.

5. Rotorfilterpresse nach Anspruch 4, **dadurch gekennzeichnet,** daß das Mutterngewinde (33) der Verschraubung im unteren Filterplattensektor (19) angeordnet ist und eine Schraube (34) durch Kanäle (32) in den beiden Filterplattensektoren (19, 20) geschraubt ist.

6. Rotorfilterpresse nach Anspruch 4 oder 5, **dadurch gekennzeichnet,** daß ein Ende des Zwischenstück-Ringsegmentes (26) und eine Öffnung (29) einer zwischen dem Ringsegment (26) und dem unteren Filterplattensektor (19) wirkenden Festlegeeinrichtung (27, 28) mit der Stirnseite (22) des unteren Filterplattensektors (19) fluchten und die Stirnseite (21) des weiteren Filterplattensektors (20) sich über das Ringsegment-Ende und die Festlegeeinrichtung-Öffnung (29) erstreckt und daß die Stirnseite (21) des weiteren Filterplattensektors (20) gegen das Ringsegment-Ende und dichtend über die Festlegeeinrichtung-Öffnung (29)preßt.

7. Rotorfilterpresse nach einem der Ansprüche 3 bis 6, **dadurch gekennzeichnet,** daß die am Träger (13) angebrachte Feder (31) auch in eine Nut (35) eines weiteren Filterplattensektors (20) greift, der an den unteren Filterplattensektor (19) anschließt.

## Claims

1. Rotor filter press in which filter plates (7) arranged vertically stand on a support (13) and have a horizontal shaft (3) passing through them centrally, in which each filter plate (7) is provided on one side face with a filter (9), forms a collecting chamber behind the filter and comprises an outlet opening (17) at the bottom, in which under the filter plates extends a collecting pipe (15) which is in each case connected by a connection piece (16) so that it can be fitted to the outlet opening (17) of the associated filter plate, and in which each filter plate is divided into filter plate sectors, and a lower filter plate sector (19) comprises the outlet opening (17), is separated by an intermediate piece (26) from the shaft (3) at a distance and is fitted by means of a rotary movement about the shaft between the shaft and the support/collecting pipe, characterised in that each collecting pipe connection piece is a connecting socket (16) over which the associated lower filter plate sector (19) is fitted with the outlet opening (17) along a lowering zone, in that the lowering zone is adapted to the distance (25) between the lower filter plate sector (19) and the shaft (3) and in that the intermediate piece is constructed as a ring segment (26) which is fitted by means of a rotary movement about the shaft (3) between the shaft (3) and the lower filter plate sector (19).

2. Rotor filter press according to claim 1, characterised in that the lower filter plate sector (19) and the intermediate piece ring segment (26) interlock with each other with a key and slot device (27, 28).

3. Rotor filter press according to claim 1 or 2, characterised in that the lower filter plate sector (19) and the support (13) interlock with each other with a key and slot device (30, 31).

4. Rotor filter press according to claim 1, 2 or 3, characterised in that the lower filter plate sector (19) and an additional filter plate sector (20) abut with end faces (21, 22) against each other and are held together in the plate plane by means of a hold-together device (33, 34), and in that a screw joint (33, 34) which is provided as the hold-together device and extends in the plate plane in the two filter plate sectors (19, 20) and is arranged at a distance from the outer filter plate edge presses the end faces (21, 22) of the filter plate sectors (19, 20) against each other.

5. Rotor filter press according to claim 4, characterised in that the nut thread (33) of the screw joint is arranged in the lower filter plate sector (19) and a bolt (34) is screwed through channels (32) in the two filter plate sectors (19, 20).

6. Rotor filter press according to claim 4 or 5, characterised in that one end of the intermediate piece ring segment (26) and an opening (29) of a fixing device (27, 28) which operates between the ring segment (26) and the lower filter plate sector (19) are aligned with the end face (22) of the lower filter plate sector (19), and the end face (21) of the additional filter plate sector (20) extends over the end of the ring segment and the opening (29) of the fixing device, and in that the end face (21) of the additional filter plate sector (20) presses against the end of the ring segment and sealingly over the opening (29) of the fixing device.

7. Rotor filter press according to any of claims 3 to 6, characterised in that the key (31) mounted on the support (13) also engages in a slot (35) of an additional filter plate sector (20) which adjoins the lower filter plate sector (19).

## Revendications

1. Filtre-presse rotatif,
- dans lequel des plaques filtrantes (7) sont agencées verticalement sur un support (13) et sont traversées au centre par un arbre horizontal (3),
- dans lequel chaque plaque filtrante (7) est pourvue sur une face latérale d'un filtre (9), la plaque filtrante forme derrière le filtre une chambre de collecte et comporte en bas une ouverture de sortie (17),
- dans lequel un tube de collecte (15) s'étend au-dessous des plaques filtrantes, ce tube de collecte étant relié en pouvant être monté via une pièce de raccord (16) à l'ouverture de sortie (17) de la plaque filtrante associée, et
- dans lequel chaque plaque filtrante est subdivisée en secteurs de plaque filtrante et un secteur inférieur (19) de la plaque filtrante comprend l'ouverture de sortie (17), la plaque filtrante étant séparée à distance de l'arbre (3) au moyen d'une pièce intermédiaire (26), et étant enfilée au moyen d'un mouvement tournant autour de l'arbre entre l'arbre et le support/le tube de collecte,
caractérisé en ce que chaque pièce de raccordement du tube de collecte est un manchon de raccord (16) au moyen duquel le secteur inférieur associé (19) de plaque filtrante comportant l'ouverture de sortie (17) est enfilé le long d'un trajet descendant,
- en ce que le trajet descendant est adapté à la distance (25) entre le secteur inférieur (19) et l'arbre (3), et
- en ce que la pièce intermédiaire est réalisée sous la forme d'un segment annulaire (26) qui est enfilé au moyen d'un mouvement tournant autour de l'arbre (3), entre l'arbre (3) et le secteur inférieur (19) de la plaque filtrante.

2. Filtre-presse rotatif selon la revendication 1, caractérisé en ce que le secteur inférieur (19) de la plaque filtrante et le segment annulaire (26) de la pièce intermédiaire s'engagent l'un dans l'autre au moyen d'un dispositif à gorge et à languette (27, 28).

3. Filtre-presse rotatif selon l'une ou l'autre des revendications 1 et 2, caractérisé en ce que le secteur inférieur (19) de la plaque filtrante et le support (13) s'engagent l'un dans l'autre au moyen d'un dispositif à gorge et à languette (30, 31).

4. Filtre-presse rotatif selon l'une quelconque des revendications 1, 2 ou 3, caractérisé en ce que le secteur inférieur (19) de la plaque filtrante et un autre secteur (20) de la plaque filtrante sont en contact l'un avec l'autre par des faces frontales (21, 22) et sont retenus ensemble dans le plan de la plaque au moyen d'un dispositif de maintien (33, 34), et en ce qu'un vissage (33, 34) prévu en tant que dispositif de maintien, s'étendant dans le plan des deux secteurs (19, 20) de la plaque filtrante et agencé à distance de la bordure extérieure de la plaque filtrante, presse l'une contre l'autre les faces frontales (21, 22) des secteurs (19, 20) de la plaque filtrante.

5. Filtre-presse rotatif selon la revendication 4, caractérisé en ce que le taraudage (33) du vissage est ménagé dans le secteur inférieur (19) de la plaque filtrante, et une vis (34) est vissée à travers des canaux (32) dans les deux secteurs (19, 20) de la plaque filtrante.

6. Filtre-presse rotatif selon l'une ou l'autre des revendications 4 et 5, caractérisé en ce qu'une extrémité du segment annulaire (26) de la pièce intermédiaire, et une ouverture (29) d'un dispositif de fixation (27, 28) agissant entre le segment annulaire (26) et le secteur inférieur (19) de la plaque filtrante affleurent avec la face frontale (22) du secteur inférieur (19) de la plaque filtrante, en ce que la face frontale (21) de l'autre secteur (20) de la plaque filtrante s'étend au-delà de l'extrémité du segment annulaire et de l'ouverture (29) du dispositif de fixation, et en ce que la face frontale (21) de l'autre secteur (20) de la plaque filtrante est pressée contre l'extrémité du segment annulaire et de façon étanche sur l'ouverture (29) du dispositif de fixation.

7. Filtre-presse rotatif, selon l'une quelconque des revendications 3 à 6, caractérisé en ce que la languette (31) ménagée sur le support (13) s'engage également dans une gorge (35) d'un autre secteur (20) de la plaque filtrante, ce secteur étant à la suite du secteur inférieur (19) de la plaque filtrante.
